## Europäisches Patentamt
## European Patent Office
## Office européen des brevets

(19)

(11) Veröffentlichungsnummer: **0 003 787**
**B1**

(12) **EUROPÄISCHE PATENTSCHRIFT**

(45) Veröffentlichungstag der Patentschrift:
**07.10.81**

(51) Int. Cl.³: **C 02 F 1/74,** B 01 F 5/04

(21) Anmeldenummer: **79100396.5**

(22) Anmeldetag: **12.02.79**

(54) **Abwasserbelüftungsbecken.**

(30) Priorität: **16.02.78 CH 1717/78**

(43) Veröffentlichungstag der Anmeldung:
**05.09.79 Patentblatt 79/18**

(45) Bekanntmachung des Hinweises auf die Patenterteilung:
**07.10.81 Patentblatt 81/40**

(84) Benannte Vertragsstaaten:
**BE CH DE FR GB IT NL SE**

(56) Entgegenhaltungen:
**AU-A-337 626**
**DE-A-2 649 756**
**FR-A-2 225 198**
**FR-A-2 249 703**
**FR-A-2 357 484**
**GB-A-442 510**
**GB-A-1 484 657**

(73) Patentinhaber: **LOCHER & CIE. AG., Pelikanplatz 5,
CH-8022 Zürich (CH)**
Patentinhaber: **CELLULOSE ATTISHOLZ AG.,
CH-4708 Luterbach (CH)**

(72) Erfinder: **Bertschinger, Hans, Rosenstrasse 6,
CH-8600 Dübendorf (CH)**
Erfinder: **Scherler, Alfred, Längacker, CH-4533 Riedholz
(CH)**

(74) Vertreter: **Schmid, Rudolf et al, c/o ISLER & SCHMID
Patentanwaltsbureau Walchestrasse 23, CH-8006 Zürich
(CH)**

ACTORUM AG.

## Abwasserbelüftungsbecken

Die Erfindung betrifft ein Abwasserbelüftungsbecken mit wenigstens einem Rohr, welches eine Oberflächenwasserzone des Behälters mit einer Bodenwasserzone desselben verbindet, und welches eine Förderpumpe zur Erzeugung einer nach unten gerichteten Strömung im Rohr aufweist, um im Behälter und im Rohr eine Wasserzirkulation aufrechtzuerhalten, wobei mehrere Verjüngungen im oberen Teil des Rohres angeordnet sind, und wobei ein Luft- und/oder Sauerstoffeinlasstutzen in den oberen Teil des Rohres mündet, um infolge der Saugwirkung nach dem Injektorprinzip die Luft und/oder den Sauerstoff feinblasig in die Strömung einzubringen.

Bekannte Anlagen dieser Art sind z.B. im Lehr- und Handbuch der Abwassertechnik, Bände I – III, 1975, beschrieben (Abwassertechnische Vereinigung e.V. in Bonn; Verlag Wilhelm Ernst und Sohn, Berlin – München – Düsseldorf). Weitere bekannte Abwasserbelüftungsbehälter gehen aus der GB-A-1.484.657, und der GB-A-442.510 hervor.

Für den biologischen Abbau von in den Abwässern enthaltenen organischen Schmutzstoffen wird Sauerstoff benötigt. Bei den gebräuchlichen Becken der biologischen Belebtschlamm-Kläranlagen wird der Sauerstoffeintrag ins Abwasser durch Einblasen von Druckluft in wenige Meter Tiefe unter dem Wasserspiegel oder durch eine Oberflächenbelüftung vorgenommen. In vereinzelten Fällen wird reiner Sauerstoff statt Luft verwendet. Das Abwasser absorbiert den Sauerstoff in gelöster Form. Beim Eintragen von Luft bzw. Sauerstoff unter die Wasseroberfläche sind die Einblastiefe und die Grösse der Gasblasen von Bedeutung für den Wirkungsgrad der Anlage. Höherer Druck bei grösserer Einblastiefe ist dem Gaseintrag förderlich, desgleichen sind viele kleine Blasen gegenüber wenigen grossen Blasen wegen der grösseren Gesamtkontaktfläche Gas/Wasser vorteilhafter. Ausserdem spielt die Kontaktzeit eine Rolle, wobei die tiefer eingebrachten Gasblasen infolge der längeren Aufsteigstrecke bis zur Wasseroberfläche über eine entsprechend längere Kontaktzeit verfügen. Andererseits ist natürlich zu beachten, dass die Grösse der Gasblasen und damit die Kontaktfläche von der jeweiligen Wassertiefe und dem dort herrschenden Druck abhängig ist.

Der für den Gaseintrag benötigte Energieverbrauch liegt bei bekannten Abwasserbelüftungsbecken in der Grössenordnung von 0,7 bis 1,5 kWh/kg eingetragenen Sauerstoff und bildet einen erheblichen Anteil der Betriebskosten einer Kläranlage.

Bei der Konzipierung eines Abwasserbelüftungsbeckens sind folgende physikalischen Bedingungen für einen optimalen Sauerstoffeintrag zu berücksichtigen:
– Feinblasigkeit des zuzuführenden Gases
– Hoher Druck während der Kontaktzeit
– Lange Kontaktzeit

– Gleichmässige Erfassung der gesamten Abwassermenge

Eine gute feinblasige Gaseintragungsmethode besteht darin, das von einem Gebläse oder Kompressor angelieferte Gas durch einen feinporigen Körper beliebiger Form unter Wasser ins Becken einzupressen. Der poröse Körper kann z.B. aus Keramik oder korrosionsfestem Kunststoff bestehen. Die Auftriebsgeschwindigkeit der von der Kissenoberfläche ins Wasser austretenden Gasblasen ist von der Blasengrösse und der Viskosität des Abwassers abhängig. So werden z.B. kleinere Blasen von grösseren oft eingeholt, so dass beim Aufsteigen in ruhendem Wasser oben grössere und weniger Blasen erscheinen als unten produziert werden, was infolge der nach oben abnehmenden Gesamtkontaktfläche Gas/Wasser nachteilig ist.

Dieser natürlichen Erscheinung kann z.B. dadurch begegnet werden, dass durch Erzeugung einer hohen Turbulenz im Wasser die grossen Blasen immer wieder zerteilt werden.

Eine Turbulenz kann durch Umlenkung des Blasenweges mit statischen Mitteln, z.B. durch Einbau von schräggestellten Leitblechen, erzielt werden, an deren Kanten Wirbelzonen entstehen. Wirksamer wären aber mechanische Einrichtungen, wie z.B. gegenläufige Paddel oder Propeller, die neben der Turbulenzerzeugung grosse Blasen auch direkt zerschlagen.

Der Druck, unter dem der Sauerstoffeintrag erfolgen soll, wird bei offenen Becken durch die Wassertiefe bestimmt, wobei der Druck bekanntlich linear mit der Tiefe zunimmt. Der Druck in den Gasblasen entspricht genau dem Druck des umgebenden Wassers in der jeweiligen Tiefe. In einer aufsteigenden Gasblase nimmt somit auch der Druck ab und gleichzeitig nimmt das Volumen zu, d.h. aufsteigende Blasen expandieren und auch die Kontaktfläche der einzelnen Blase vergrössert sich.

Für die Erzielung von hohen Drücken im Abwasser stehen grundsätzlich zwei verschiedene Möglichkeiten offen, nämlich die Erzeugung von hohem Druck in geschlossenen Behältern mittels hydraulischer oder pneumatischer Aggregate einerseits und die Ausnützung grosser Wassertiefen in Belüftungstürmen oder Belüftungsschächten andererseits.

Während bei Abwassertürmen das Rohabwasser und auch der Rückschlamm auf die Druckhöhe des Turmes gepumpt werden muss, entfällt dieser Aufwand dort, wo ein unterirdischer Schacht abgeteuft werden kann. Hier erwachsen für Abwasserzulauf, Rückschlammförderung und Wasserablauf kaum andere Energiekosten als bei bisher üblichen Flachbeckenanlagen. Dafür ist der mit dem Sauerstoffeintrag ins Wasser verbundene Energieaufwand relativ gross.

Beim Abwasserturm und beim Abwassertiefschacht spielt die Wasserumwälzung eine wichtige Rolle. Die Querschnittsabmessungen sind relativ klein gegenüber der Wassertiefe, und das Wasser wälzt sich nicht selbständig um, da keine grossen Temperaturen oder Dichteunterschiede auftreten. Im Betrieb genügt es deshalb nicht, oben abfliessendes, sauerstoffreiches Wasser durch oben eingebrachtes, zufliessendes Wasser zu ersetzen, weil dieses praktisch nicht bis in die unteren Zonen hinabströmen könnte, wo der rationelle Sauerstoffeintrag stattfinden kann.

Die Wasserzirkulation muss deshalb künstlich erzeugt bzw. unterstützt werden. Wenn der Sauerstoff am Turm- oder Schachtboden eingebracht wird, ist das unbehandelte Abwasser an diese Bodenpartie heranzubringen, und zwar zusammen mit dem Rückschlamm aus der Nachklärung. Der Schachtinhalt ist derart auf die Abwassermenge abzustimmen, dass entsprechend der Abbauleistung eine dieser angemessene Aufenthaltszeit des Abwassers im Behälter resultiert.

Bei Abwasserschächten werden zweckmässigerweise die Abwasserzulaufleitung und die Luft- oder Sauerstoffleitung ins Innere des Schachtes verlegt. Es kann auch angezeigt sein, statt das Wasser nur einmal den Weg von unten nach oben strömen und dann ins Nachklärbecken laufen zu lassen, das im Schacht vorhandene Wasser mehrfach in vertikaler Richtung umzuwälzen. Dies kann z.B. dadurch erfolgen, dass der Turm oder Schacht in zwei oder mehr gleiche oder ungleiche Schächte durch vertikale Wände oder Rohre unterteilt wird und die Umwälzung mit Förderpumpen erfolgt. Für eine gute Durchmischung wird mit Vorteil das Rohabwasser in den abwärtsgerichteten Strom der Umwälzung beigegeben.

Um eine möglichst lange Kontaktzeit der Gasblasen im Wasser zu erzielen, wird die Luft mittels eines Kompressors auf einen hohen Druck gebracht und dann möglichst in Bodennähe des Schachtes und möglichst kleinblasig ins Abwasser eingebracht.

Ein Abwasserbelüftungsbecken dieser Art ist in der GB-A-1.484.657 beschrieben. Der Eintrag von Luft oder Sauerstoff in das Wasser erfolgt mittels einer Wasserförderpumpe und Injektorpumpen. Dazu wird Bodenwasser mittels einer Förderpumpe über ein senkrechtes Rohr angesaugt, dann umgelenkt und in weiteren senkrechten Rohren nach unten geleitet. Letztere weisen Diffusoren auf, in welche Einlasstutzen für das Gas münden. Das mit Gasblasen durchsetzte Wasser fliesst nach unten und strömt unmittelbar oberhalb des Behälterbodens aus. Die Querschnittsverhältnisse in den Rohren entsprechen in etwa denjenigen normaler Injektoranlagen, die an sich technisch seit langem bekannt sind.

Wesentlich bei der britischen Patentschrift scheint die Gesamtanordnung der Wasserumwälzung zu sein, indem der Vorlauf zur Umwälzpumpe seinen Zulauf knapp über dem Behälterboden besitzt. Das Verbindungsrohr von der Umwälzpumpe zu den Injektorpumpen ist so ausgebildet, dass es nach der Umwälzpumpe aufsteigt, dann umgebogen ist und nach unten gerichtete Abgänge zu den Injektoren aufweist. Diese Anordnung birgt folgende Gefahr in sich: Im Umwälzrohr werden auch im aufsteigenden Teil mit der Umwälzpumpe Gasblasen mitgefördert, im vorliegenden Fall sogar besonders ausgiebig, weil der Rohreintritt in Bodennähe angeordnet ist, wo auch das Wasser-Gas-Gemisch austritt. Aber selbst gelöste Gase werden im aufsteigenden Rohr wegen der Druckabnahme gegen oben und infolge der Entspannung in der Pumpe als Blasen ausgeschieden. Diese Gase sammeln sich im obersten Rohranlagenteil an und stören den Umlauf des Wassers derart, dass eine kontrollierbare Beschickung der Injektoren und deren Funktion innert kürzester Zeit nicht mehr gewährleistet ist.

Es ist nun Aufgabe der Erfindung, die Nachteile der bekannten Anlagen zu beheben. Es soll ein Abwasserbelüftungsbecken der eingangs erwähnten Gattung geschaffen werden, bei welchem der Energieaufwand für den Sauerstoffeintrag verringert und gleichzeitig der Wirkungsgrad des Eintrages verbessert wird. Erfindungsgemäss wird dies so erreicht, dass eine Rückschlammleitung in eine der Rohrverengungsstrecken mündet zwecks Ansaugen des Rückschlammes in die Strömung, dass die Strömungsgeschwindigkeit des Abwassers im Rohr unmittelbar unterhalb einer an die Verjüngungen anschliessenden Erweiterung grösser ist als die Auftriebsgeschwindigkeit der in der Strömung suspendierten Gasblasen an der selben Stelle, und dass zur Erhaltung der Feinblasigkeit des Gases mindestens ein an sich bekannter Turbulenzerzeuger im Behälter untergebracht ist.

Durch diese Ausbildung des Abwasserbelüftungsbeckens wird ein sehr feinblasiger Sauerstoffeintrag ins Abwasser erzielt, d.h. die Gesamtgasblasenoberfläche ist gross, was eine entsprechend hohe Diffusionsgeschwindigkeit des Sauerstoffes ins Wasser ergibt. Die Auftriebsgeschwindigkeit der kleinen Gasbläschen ist sehr klein, so dass eine lange Kontaktzeit erreicht wird. Durch die hohe Turbulenz und Mikroturbulenz des Wassers werden die sauerstoffgesättigten Grenzschichten der Gasbläschen rasch erneuert und die Lösungs- und Diffusionsgeschwindigkeit wird vorteilhaft beeinflusst. Die gute Durchmischung und Umwälzung des Abwassers führt zu einer homogenen Verteilung der Schmutzstoffe, des Sauerstoffes und des Schlammes und trägt zur Erzielung einer ausgeglichenen Abbauleistung der organischen Schmutzstoffe bei. Da die Luft und/oder der Sauerstoff nicht in der Bodenzone, sondern in einer oberen Zone in das nach unten führende Rohr eingebracht wird, ist der Gasdruck niedriger als bei direkter Einbringung des Gases in die Bodenzone wie bei bekannten Kläranlagen, so dass der Energieaufwand wesentlich geringer ist.

Durch Anbringung der Pumpe oben und der Diffusoren unten, praktisch in der gleichen senkrechten Achse, können nachteilige Gasansammlungen vermieden werden.

Schliesslich sei darauf hingewiesen, dass durch die oben erwähnten Massnahmen die die Schmutzstoffe abbauenden Mikroorganismen nicht nur nicht beeinträchtigt werden, sondern sich sowohl die sog. Substratatmung als auch die endogene Atmung beschleunigen und intensivieren. Dadurch sind geringere Aufenthaltszeiten des Abwassers im Belebungsbehälter bzw. kleinere Behälter erforderlich.

Versuche haben gezeigt, dass durch das erfindungsgemässe Abwasserbelüftungsbecken pro kWh ein Mehrfaches an Sauerstoff in das Abwasser eingebracht werden kann gegenüber bekannten Kläranlagen.

Nachstehend wird anhand der Zeichnungen ein Ausführungsbeispiel der Erfindung näher erläutert.

Es zeigen:
Fig. 1 einen Vertikalschnitt durch einen im Boden versenkten Abwasserbelüftungsschacht,
Fig. 2 einen Horizontalschnitt nach der Linie II – II durch den Schacht gemäss Fig. 1,
Fig. 3 einen Horizontalschnitt nach der Linie III – III durch den Schacht gemäss Fig. 1,
Fig. 4 ein Detail der Pumpen- und Injektorpartie gemäss dem Ausschnitt IV nach Fig. 1 in grösserem Masstab und
Fig. 5 schematisch die horizontale Abwicklung der Turbulenzerzeuger.

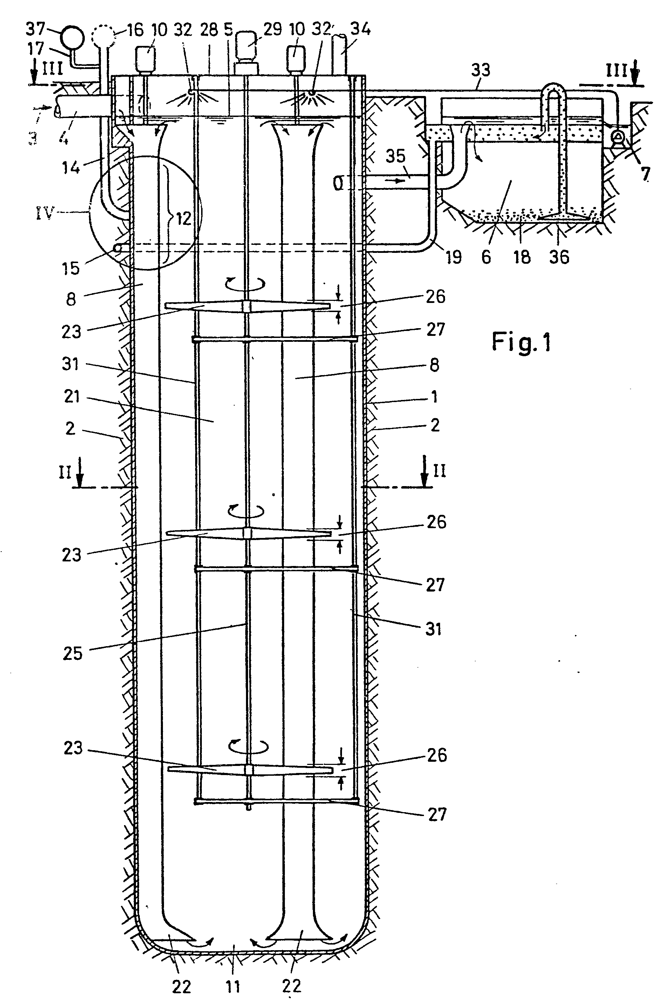

Der in der Fig. 1 dargestellte Abwasserbelüftungsschacht gehört zur Gattung der offenen Bauformen, bei denen die Wasseroberfläche dem Atmosphärendruck ausgesetzt ist. Es sind sowohl Ausführungsformen als Türme oberirdisch, als Schächte unterirdisch oder in Zwischenlage möglich, die sich für relativ grosse Wassermengen mit unterschiedlicher Schmutzstoffkonzentration eignen. Die Wassertiefen betragen zwischen 10 m bis 50 m, es sind aber auch tiefere Schächte möglich. Die Durchmesser betragen etwa 1,5 bis 3 m, wobei aber auch grössere Durchmesser möglich sind.

Hauptbestandteil der Anlage gemäss Fig. 1 ist der in das Erdreich 2 eingelassene Abwasserbehälter 1. Der Zulauf des Rohabwassers 3 erfolgt über den Kanal 4, der oberhalb der Wasseroberfläche 5 in den Behälter 1 mündet. Neben dem Behälter 1, ebenfalls im Erdreich 2 versenkt, befindet sich ein Nachklärbecken 6, dessen Überlauf mit dem Abflusskanal 7 in Verbindung steht.

Drei in den Behälter 1 ragende senkrechte Rohre 8, in denen eine nach unten gerichtete Wasserströmung 9 mittels Wasserförderpumpen 10 erzeugt wird, verbinden den oberen Teil des Behälters 1 mit seiner Bodenzone 11 und führen Oberflächenwasser nach unten.

Bei den Wasserförderpumpen 10 kann es sich um an sich bekannte, elektrisch angetriebene Prärotationspumpen handeln. Im oberen Bereich 12 des Rohres 8 ist eine Anzahl nacheinandergeschalteter Rohrverengungsstrecken 13a – 13d angeordnet, in der Form von Venturi-Düsen. In diesen Strecken 13 wird infolge der Injektorwirkung die Strömungsgeschwindigkeit V beschleunigt, was einen niedrigeren statischen Druck zur Folge hat. Eine Luftzuführungsleitung 14 mündet im Bereich der ersten Rohrverengungsstrecke 13a in das Rohr 8, so dass die Luft 16 angesaugt wird und sich mit dem Wasserstrahl unmittelbar unterhalb der ersten Düse 13a intensiv vermischt. Bei einer der nachfolgenden Rohrverengungsstrecken 13c mündet der Einlasstutzen 15 ins Rohr 8, der den Rückschlamm 18 über die Leitung 19 zuführt. Der Rückschlamm 18 wird ebenfalls durch die Strömung 9 angesaugt und intensiv mit dem nach unten fliessenden Abwasser vermischt. Statt Luft 16 könnte auch reiner Sauerstoff 17 oder mit Sauerstoff angereicherte Luft auf dieselbe Weise in die Strömung eingebracht werden.

Durch das anschliessend wieder erweiterte Rohr 8 fliesst somit ein Gemisch aus Rohabwasser 3, Umwälzwasser 21 und Luft 16 bzw. Sauerstoff 17. Die stationäre Auftriebsgeschwindigkeit $V_A$ der Gasblasen ist unmittelbar unterhalb der Verengungsstrecken 13 am grössten, weil an dieser Stelle 20 noch ein niedrigerer Druck herrscht als an einer tiefer gelegenen Stelle gegen den Behälterboden hin, und das Volumen der Gasblasen hier noch am grössten ist. Damit die in der Strömung 9 suspendierten Gasblasen 16, 17 nach unten mittransportiert werden, muss die Strömungsgeschwindigkeit V des Wassers an der Stelle 20 etwas grösser sein als die stationäre Auftriebsgeschwindigkeit $V_A$ der Gasblasen. Beim Transport nach unten geraten die Gasblasen in Zonen linear zunehmenden Druckes und werden dadurch kleiner, so dass ihre Auftriebsgeschwindigkeit abnimmt. Allerdings steigt durch den geringeren Gasvolumenanteil des Gemisches dessen Dichte etwas an, unterstützt noch dadurch, dass wegen Diffusion von Sauerstoff und Wasser ein zusätzlicher Gasvolumenschwund eintritt. Bei konstantem Querschnitt des Rohres 8 entsteht deshalb eine geringe Geschwindigkeitsabnahme, was seinerseits wieder zu einer Druckzunahme und Dichtezunahme des Gemisches führt. Im konkreten Fall sind allerdings diese Veränderungen relativ klein.

Immerhin kann bei langen Rohren und ausreichend langer Kontaktzeit ein nahezu vollständiger Sauerstoffübertritt ins Wasser bereits im Rohr 8 erreicht werden. Für die Kontaktzeit ist die Geschwindigkeitsdifferenz $\triangle V = V - V_A$ der nach abwärts gerichteten Strömung bzw. des nach oben gerichteten Auftriebes wesentlich, wobei natürlich diese Differenz positiv sein muss, damit alle angesogenen Gasblasen nach unten befördert werden. Ist dieser Unterschied gross, so erreichen die Gasblasen das untere Rohrende rasch, ist er aber klein, so wird die angestrebte lange Kontaktzeit erzielt.

Nach Erreichen der Rohrmündung 22 in der Behälterbodenzone 11 strömt das Gemisch im Abwasserbehälter 1 nach oben. Die Gasblasen streben nun der Wasseroberfläche 5 zu und geraten dadurch in Zonen kleiner werdenden Druckes, d.h. es spielen sich bezüglich Blasengrösse und Gemischdichte die umgekehrten Vorgänge ab im Vergleich zu denen in der nach unten gerichteten Strömung im Rohr 8. Da die Grösse der Gasblasen unterschiedlich ist, bewegen sich die einen rascher nach oben als die anderen, so dass sie sich vereinen und einzelne grössere Blasen entstehen.

Zur Erhaltung der Feinblasigkeit des Gases auf seinem relativ langen Weg im Behälter kann es vorteilhaft sein, an einer oder mehreren Stellen intensive Turbulenzzonen 26 vorzusehen. Zur Erzeugung der Turbulenz werden mechanische Mittel verwendet, die den ganzen Schachtquerschnitt bestreichen, jedoch eine sehr geringe Turbulenzschichtstärke erzeugen und so wenig Energie benötigen. Durch diese Turbulenzzonen 26 wird erreicht, dass grössere Blasengebilde an verschiedenen Stellen verkleinert werden, um die Feinblasigkeit des Gases über die ganze Wassertiefe zu erhalten.

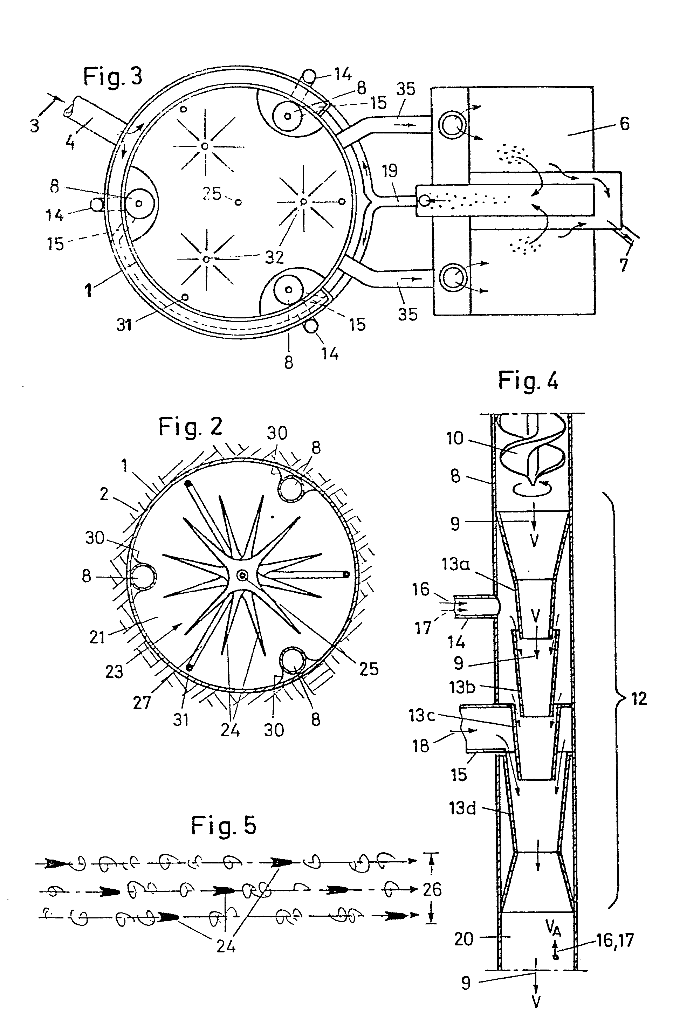

Als Turbulenzerzeuger können beispielsweise die in den Fig. 1 und 2 gezeigten Propellervorrichtungen 23 dienen. Jede Vorrichtung 23 umfasst ein Paket von zwölf Propellerschaufeln 24, die auf der Antriebswelle 25 befestigt sind. Das Schaufelpaket weist eine geringe Dicke auf, damit die Schichtstärke der horizontalen Verwirbelungszone 26 möglichst gering bleibt. Die dünne Antriebswelle 25 ist in drei Halterungen 27 gelagert und wird mittels des auf der Behälterabdeckung 28 montierten Getriebemotors 29 angetrieben. Wegen der höheren Geschwindigkeit der Schaufeln gegen ihre äusseren Enden hin, können sie von der Welle 25 her nach aussen dünner werden, damit die Schichtstärke der Wirbelzone 26 über den ganzen Durchmesser etwa gleichbleibt. Der an sich unerwünschten Rotation des gesamten Behälterinhaltes wirken die drei Rohre 8 als Schikanen entgegen. Zur Vermeidung von Schlammablagerungen sind Abdeckbleche 30 zwischen den Rohren und der inneren Behälterwandung angeordnet, um die verlorenen Eckräume abzudecken.

Um die Propellervorrichtungen 23 zusammen mit der Antriebswelle 25 zwecks Revision aus dem Behälter entnehmen zu können, sind an der Behälterinnenwandung drei Führungsstangen 31 befestigt. Die äusseren Enden der Halterungen 27 sind auf diesen Führungsstangen gleitend gelagert, so dass die Antriebswelle 25 zusammen mit den Propellervorrichtungen 23 auf einfache Weise aus dem Behälter 1 entfernt werden kann.

Auf der Behälterabdeckung 28 können in an sich bekannter Weise Wasserdüsen 32 befestigt werden zur allfälligen Schaumbekämpfung über dem Wasserspiegel 5 des Behälters. Das Spritzwasser wird über die Leitung 33 dem Abflusskanal 7 entnommen. Oben auf der Behälterabdeckung 28 ist ferner ein Abgasstutzen 34 angeordnet zur Entfernung der verbrauchten Luft.

Ein Teil des durch die Rohre 8 nach unten und im Behälter 1 von unten nach oben zirkulierenden, belüfteten Abwassers 21 wird ständig dem Behälter 1 entnommen und gelangt über die Rohrleitungen 35 in das Nachklärbecken 6. Ein Teil des sich im Nachklärbecken 6 absetzenden Schlammes 18 wird über den Saugheber 36 und die Rückschlammleitung 19 wieder dem Abwasser-Zirkulationskreislauf zugeführt. Der Sauerstofftank 37 dient der Versorgung der Anlage mit reinem Sauerstoff 17, der alternativ oder zusammen mit Luft 16 verwendet werden kann.

Die Dimensionierung der gesamten Anlage ist von Fall zu Fall individuell vorzunehmen, weil neben Menge und Zusammensetzung des zu behandelnden Abwassers z.B. der Baugrund für den Behälter eine wichtige Rolle spielen kann. Die Behältergrösse, die Aufenthaltszeit des Wassers im Behälter, die Pumpenleistung, die Umwälzgeschwindigkeit, der Rohrdurchmesser usw. müssen in der Dimensionierung aufeinander abgestimmt werden, um den Belüftungsprozess optimal zu gestalten. Die Einflüsse der verschiedenen physikalischen und biologischen Parameter werden auf der Grundlage von Versuchsergebnissen bestimmt. Die bei der geschilderten Anlage betriebene Intensivbelüftung führt zu einer namhaften Wärmeproduktion im Behälter, der im Erdreich relativ gut isoliert ist. Es wäre daher möglich, die erhöhte Wassertemperatur zu nützen, beispielsweise durch eine Wärmepumpe.

**Patentansprüche**

1. Abwasserbelüftungsbecken mit wenigstens einem Rohr, welches eine Oberflächenwasserzone des Behälters mit einer Bodenwasserzone desselben verbindet, und welches eine Förderpumpe zur Erzeugung einer nach unten gerichteten Strömung im Rohr aufweist, um im Behälter und im Rohr eine Wasserzirkulation aufrechtzuerhalten, wobei mehrere Verjüngungen im oberen Teil des Rohres angeordnet sind, und wobei ein Luft- und/oder Sauerstoffeinlasstutzen in den oberen Teil des Rohres mündet, um infolge der Saugwirkung nach dem Injektorprinzip die Luft und/oder den Sauerstoff feinblasig in die Strömung einzubringen, dadurch gekennzeichnet, dass eine Rückschlammleitung (15, 19) in eine der Rohrverengungsstrecken (13) mündet zwecks Ansaugen des Rückschlammes (18) in die Strömung (9), dass die Strömungsgeschwindigkeit (V) des Abwassers im Rohr (8) unmittelbar unterhalb einer an die Verjüngungen anschliessenden Erweiterung grösser ist als die Auftriebsgeschwindigkeit $(V_A)$ der in der Strömung (9) suspendierten Gasblasen an der selben Stelle (20), und dass zur Erhaltung der Feinblasigkeit des Gases mindestens ein an sich bekannter Turbulenzerzeuger (23) im Behälter (1) untergebracht ist.

2. Abwasserbelüftungsbecken nach Anspruch 1, gekennzeichnet durch mehrere, senkrecht in den Behälter ragende Rohre (8), wobei jedem Rohr (8) eine Förderpumpe (10) zugeordnet ist.

3. Abwasserbelüftungsbecken nach Anspruch 1, dadurch gekennzeichnet, dass die Turbulenzerzeuger (23) je aus einem Paket von Propellerschaufeln (24) bestehen, die durch eine gemeinsame Antriebswelle (25) antreibbar sind, und dass die Paketdicke wesentlich kleiner ist als der Paketdurchmesser.

4. Abwasserbelüftungsbecken nach Anspruch 3, dadurch gekennzeichnet, dass die in den Behälter (1) ragende Antriebswelle (25) in mehreren, im Abstand voneinander angeordneten Halterungen (27) gelagert ist, die ihrerseits in der Höhe verschiebbar mit Führungsstangen (31) verbunden sind, welche an der Behälterinnenwandung befestigt sind.

**Claims**

1. A sewage aeration basin having at least one pipe which connects a surface water region of the container to a bottom water region, and which comprises a feed pump to produce a downwardly directed flow in the pipe in order to maintain a water circulation in the container and in the pipe, wherein a plurality of constrictions are provided in the upper portion of the pipe and wherein an air and/or oxygen inlet socket leads into the upper portion of the pipe so as to introduce the air and/or the oxygen in the form of fine bubbles into the flow as a result of the suction effect on the injector principle, characterised in that a return slurry conduit (15, 19) leads into one of the pipe constriction sections (13) for the purpose of sucking the return slurry (18) into the flow (9), that the velocity of flow (V) of the sewage in the pipe (8) immediately below a widened portion following on the constriction is greater than the uplift velocity $(V_A)$ of the gas bubbles suspended in the flow (9) at the same place (20), and that in order to obtain the fine bubble nature of the gas, at least one turbulence generator (23, known per se, is accommodated in the container (1).

2. A sewage aeration basin as claimed in Claim 1, characterised by a plurality of pipes (8) extending vertically in the container, a feed pump (10) being associated with each pipe (8).

3. A sewage aeration basin as claimed in Claim 1, characterised in that the turbulence generators (23) each consist of a packet of propeller blades (24) which can be driven by a common drive shaft (25) and that the thickness of the packet is considerably less than the diameter of the packet.

4. A sewage aeration basin as claimed in Claim 3, characterised in that the drive shaft (25) extending into the container (1) is mounted in a plurality of holders (27) which are disposed spaced apart and which in turn are displaceable in height with guide rods (31) which are secured to the inner wall of the container.

**Revendications**

1. Bassin d'aérage des eaux usées comportant au moins un tube reliant une zone de l'eau de surface du réservoir à une zone d'eau du fond de celui-ci, et présentant une pompe de circulation destinée à produire dans le tube un courant dirigé vers le bas, afin de maintenir une circulation d'eau dans le réservoir et dans le tube, plusieurs étranglements étant disposés à la partie supérieure du tube, et une tubulure d'admission d'air et/ou d'oxygène débouchant à la partie supérieure du tube, afin d'introduire dans le courant de petites bulles d'air et/ou d'oxygène par suite de l'effet d'aspiration suivant le principe de l'injecteur, caractérisé en ce qu'une conduite des boues de retour (15, 19) débouche dans l'une des sections d'étranglement du tube (13) afin d'aspirer les boues de retour (18) dans le courant (9), en ce que la vitesse d'écoulement (V) des eaux usées dans le tube (8) immédiatement au-dessous d'un évasement faisant suite aux étranglements, est supérieure à la vitesse de poussée $(V_A)$ des bulles de gaz en suspension dans le courant (9) au même emplacement (20), en ce que le réservoir (1) comprend au moins un générateur de turbulences (23) connu en soi pour maintenir la finesse des bulles de gaz.

2. Bassin d'aérage des eaux usées suivant la revendication 1, caractérisé par plusieurs tubes (8) dressés verticalement dans le réservoir, une pompe de circulation (10) étant affectée à chaque tube (8).

3. Bassin d'aérage des eaux usées suivant la revendication 1, caractérisé en ce que le générateur de turbulence (23) est constitué d'un ensemble de pales d'hélices (24), entraînées par un arbre d'entraînement commun (25), et en ce que l'épaisseur de l'ensemble des pales est nettement plus petite que son diamètre.

4. Bassin d'aérage des eaux usées suivant la revendication 3, caractérisé en ce que l'arbre d'entraînement (25) monté dans le réservoir (1) repose sur plusieurs supports (27) espacés les uns des autres qui à leur tour sont réglables en hauteur et reliés à des tiges de guidage (31) fixées sur la paroi intérieure du réservoir.

Fig.1

Fig. 3

Fig. 4

Fig. 2

Fig. 5